(19) Europäisches Patentamt

European Patent Office

Office européen des brevets

(11) Veröffentlichungsnummer: **0 324 928 B1**

(12) **EUROPÄISCHE PATENTSCHRIFT**

(45) Veröffentlichungstag der Patentschrift: **23.06.93**

(21) Anmeldenummer: **88119843.6**

(22) Anmeldetag: **29.11.88**

(51) Int. Cl.⁵: **F16H 59/06, B60K 41/00**

(54) **Getriebesteuerung für ein stufenlos arbeitendes Getriebe.**

(30) Priorität: **22.01.88 DE 3801845**

(43) Veröffentlichungstag der Anmeldung:
**26.07.89 Patentblatt 89/30**

(45) Bekanntmachung des Hinweises auf die
Patenterteilung:
**23.06.93 Patentblatt 93/25**

(84) Benannte Vertragsstaaten:
**DE FR GB**

(56) Entgegenhaltungen:

**PATENT ABSTRACTS OF JAPAN vol. 10, no.
122 (M-476)(2179) 07 Mai 1986, & JP-A-60
249761 (TOYOTA) 22 Mai 1984,**

**ANTRIEBSTECHNIK vol. 24, no. 2, 1985,
MAINZ BRD Seiten 49 - 51; G.Abromite:
"Konzept einer el.Steuerung für ein stufenloses mechanisches Getriebe"**

(73) Patentinhaber: **FORD-WERKE AKTIENGESELL-
SCHAFT**
**Werk Köln-Niehl Henry-Ford-Strasse Postfach 60 40 02**
**W-5000 Köln 60(DE)**

(84) Benannte Vertragsstaaten:

**DE**

(73) Patentinhaber: **FORD MOTOR COMPANY LI-
MITED**
**Eagle Way**
**Brentwood Essex CM13 3BW(GB)**

(84) Benannte Vertragsstaaten:
**GB**

(73) Patentinhaber: **FORD FRANCE SOCIETE ANO-
NYME**
**344 Avenue Napoléon Bonaparte B.P. 307**
**F-92506 Rueil Malmaison Cedex(FR)**

(84) Benannte Vertragsstaaten:
**FR**

(72) Erfinder: **Staffel, Hermann**
**In der Auen 123**
**W-5060 Bergisch-Gladbach(DE)**
Erfinder: **Neuhaus, Rolf**
**Meisenweg 7**
**W-8770 Lohr/Main(DE)**
Erfinder: **Czakai, Cristian**
**Eichenstrasse 5**
**W-8770 Lohr/Main(DE)**

(74) Vertreter: **Messulam, Alec Moses**
**A. Messulam & Co. 24 Broadway**
**Leigh on Sea Essex SS9 1BN (GB)**

**Beschreibung**

Die Erfindung bezieht sich auf eine Regelgetriebesteuerung, insbesondere für ein Kraftfahrzeug. Insbesondere bezieht sich die Erfindung auf eine elektrische Regelgetriebesteuerung für einen Personenkraftwagen. Der Personenkraftwagen verwendet dabei insbesondere eine stufenloses mechanisches Getriebe mit einem Primär- und einem Sekundärscheibenpaar, und zwar verbunden durch ein Schubgliederband.

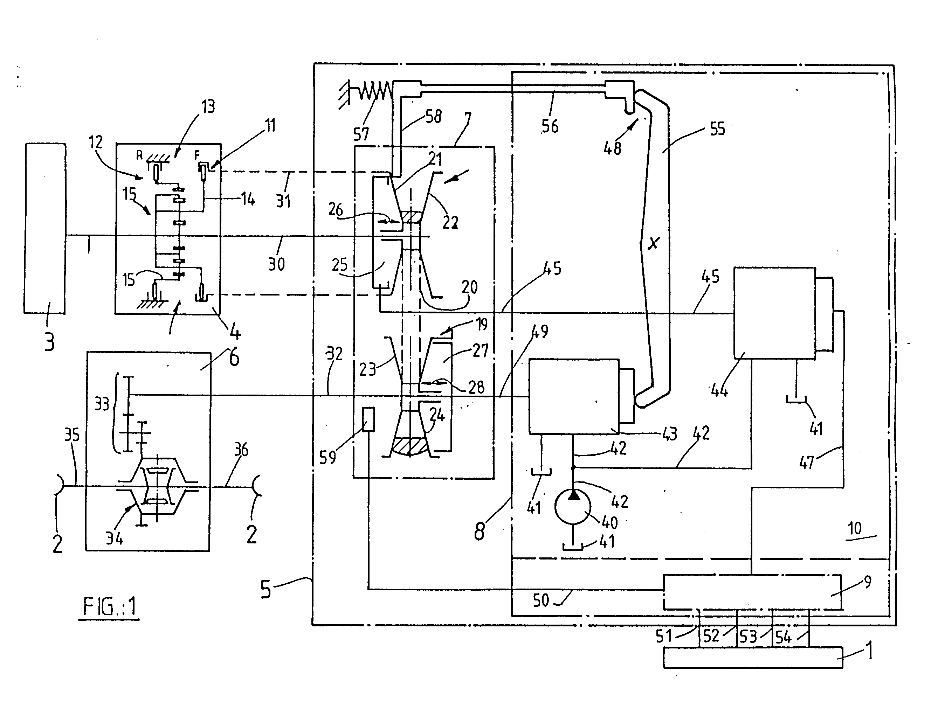

Aus der Zeitschrift "Antriebstechnik" 24 (1985) Nr. 2, Seiten 49 bis 51, ist bereits das Konzept einer elektronischen Steuerung für ein stufenloses mechanisches Getriebe gemäß Oberbegriff des Anspruchs 1 bekannt. Dies wird weiter unten auch anhand der Fig. 1 erläutert.

Die vorliegende Erfindung hat sich zum Ziel gesetzt, eine elektrohydraulische Regelgetriebesteuerung insbesondere gemäß dem Oberbegriff des Anspruchs 1 derart vorzusehen, daß alle Betriebsweisen des Fahrzeugs sicher beherrscht werden können. Die Erfindung bezweckt insbesondere, die Ausbildung der Regelgetriebesteuerung derart vorzusehen, daß sich bei einem Ausfall der Stromversorgung keine Gefahren für den Betrieb des Fahrzeugs ergeben.

Weitere Vorteile, Ziele und Einzelheiten der Erfindung ergeben sich für den Fachmann aus der Beschreibung der Erfindung anhand der Zeichnung; in der Zeichnung zeigt:

| | |
|---|---|
| Fig. 1 | eine schematische Darstellung des Standes der Technik gemäß der Zeitschrift "Antriebstechnik" 24 (1985) (Nr. 2); |
| Fig. 2 | eine Abwandlung der Regelgetriebesteuerung gemäß Fig. 1; |
| Fig. 3 | eine Weiterbildung der Regelgetriebesteuerung gemäß Fig. 2; |
| Fig. 4a, 4b und 4c | zusammengenommen eine schematische Darstellung der erfindungsgemäßen Regelgetriebesteuerung; |
| Fig. 5a, 5b und 5c | zusammengenommen eine detailliertere Darstellung der erfindungsgemäßen Regelgetriebesteuerung gemäß Fig. 4; |
| Fig. 6 | einen Längsschnitt einer ersten Variante eines erfindungsgemäßen Übersetzungsregelventils; |
| Fig. 7 | eine zweite Variante eines erfindungsgemäßen Übersetzungsregelventils; |
| Fig. 8 | im Längsschnitt ein erfindungsgemäßes Systemdruckregelventil; |
| Fig. 9 | im Längsschnitt ein erfindungsgemäßes Kupplungsansteuerventil; |
| Fig. 10 | im Längsschnitt ein erfindungsgemäßes Kupplungssicherheitsventil; |
| Fig. 11 | im Längsschnitt ein erfindungsgemäßes Drehzahlerkennungssicherheitsventil; |
| Fig. 12 | im Längsschnitt ein erfindungsgemäßes Schmieröldruckregelventil; |
| Fig. 13 | im Längsschnitt ein erfindungsgemäßes Sicherheits ventil; |
| Fig. 14 | ein Funktionsdiagramm der Regelgetriebesteuerung; |

In Fig. 1 ist schematisch das Triebwerk eines Kraftfahrzeugs dargestellt, und zwar insbesondere eines PKWs. Der PKW ist speziell für Frontantrieb und Quereinbau des Motors konzipiert.

Im einzelnen zeigt Fig. 1 vom Fahrer des PKWs betätigbare Eingabemittel 1, die zur Beeinflussung der Übertragung des Drehmoments des Motors (Antriebsmaschine) 3 auf die Räder 2 dienen. Der Motor 3 ist über eine Kupplungsvorrichtung 4, ein elektrohydraulisch angesteuertes stufenloses mechanisches Getriebe 5 und eine Antriebsvorrichtung 6 mit den Rädern 2 verbunden. Das elektrohydraulisch angesteuerte stufenlose mechanische Getriebe 5 weist ein stufenloses mechanisches Getriebe 7 sowie eine elektrohydraulische Ansteuerung 8 für das Getriebe 7 auf. Die elektrohydraulische Ansteuerung 8 ihrerseits weist eine Ansteuerelektronik 9 und eine elektrohydraulische Ventilanordnung 10 auf.

Im einzelnen ist eine Abtriebswelle 29 des Motors 3 mit der Kupplung 13 der Kupplungsvorrichtung 4 verbunden. Die Kupplung 13 weist in bekannter Weise eine Vorwärtskupplung 11 und eine Rückwärtskupplung 12 auf. Ferner ist ein einen Planetenradträger 14 und ein Hohlrad 15 aufweisendes Planetengetriebe 16 in der Kupplungsvorrichtung 4 vorgesehen.

Das stufenlose mechanische Getriebe 7 weist ein Primärscheibenpaar 18 und ein Sekundärscheibenpaar 19 auf, und zwar verbunden durch ein Schubgliederband 20. Das Primärscheibenpaar 18 umfaßt eine erste oder linke Primärscheibe 21 und eine zweite oder rechte Primärscheibe 22. Das Sekundärscheibenpaar 19 weist eine erste oder linke Sekundärscheibe 23 und eine zweite oder rechte Sekundärscheibe 24 auf.

Die erste Primärscheibe 21 bildet in nicht näher dargestellter Weise einen Primärzylinder 25, der bei Druckmittelbeaufschlagung über eine noch zu beschreibende Leitung 45 die axial bewegliche erste Primärscheibe 21 gemäß Pfeil 26 gegenüber der zweiten axial unbeweglichen Primärscheibe 22 bewegen kann.

Ähnlich bildet die zweite axial bewegliche Sekundärscheibe 24 einen Sekundärzylinder 27, der bei Beaufschlagung mit Druckmittel, geliefert von einer Leitung 49, eine Bewegung gemäß Pfeil 28 gegenüber der axial stationären ersten Primärscheibe 23 bewirken kann.

Die Kupplungsvorrichtung 4 überträgt je nachdem ob die Vorwärts- oder die Rückwärtskupplung 11 oder 12 in Eingriff stehen, das Drehmoment über Abtrieb 31 oder Abtrieb 30 auf das Primärscheibenpaar 18.

Bevor auf das Getriebe 5 im einzelnen eingegangen wird, sei noch bemerkt, daß eine Abtriebswelle 32 das Sekundärscheibenpaar 19 mit einem Reduktionsgetriebe 33 verbindet, welches seinerseits mit einem Differentialgetriebe 34 verbunden ist. Das Differentialgetriebe 34 schließlich treibt über Antriebswellen 35 und 36 die Räder 2 an.

Die elektrohydraulische Ansteuerung (Regelsteuerung) 8 besteht, wie erwähnt, im wesentlichen aus der Ansteuerelektronik 9 und der elektrohydraulischen Ventilanordnung 10, die über die bereits erwähnten Hydraulikleitungen 45 und 49 mit dem Primärzylinder 25 bzw. dem Sekundärzylinder 27 in Verbindung stehen. Ferner ist eine Hydraulikpumpe 40 vorgesehen, die hydraulisches Druckmedium, beispielsweise Hydrauliköl, von einem Tank 41 absaugt und über eine Leitung 42 zum einen an ein Hauptöldruckventil 43 (im folgenden auch Systemdruckventil oder Anpressdruckventil) und an ein Primärventil oder Übersetzungsventil 44 liefert. Beide Ventile 43, 44 stehen ferner mit Tank 41 in Verbindung.

Das Übersetzungsventil 44 weist einen elektrischen Antrieb auf, der über die elektrische Leitung 47 vom Mikroprozessor 9 betätigt werden kann.

Das Anpreßdruckventil 43 kann durch einen Hebel 55 betätigt werden, un mehr oder weniger Anpressdruck an den Sekundärzylinder 27 zu liefern. Der Hebel 55 ist über eine Verbindung 48 sowie Schieber 56, Feder 57 und Fühler 58 mit der axial beweglichen ersten Primärscheibe verbunden, so daß entsprechen der durch das Primärscheibenpaar 18 vorgegebenen Übersetzung der Anpressdruck des Sekundärscheibenpaares 19 verändert werden kann.

Die Ansteuerelektronik 9 steht über eine Leitung 50 mit einem Fahrgeschwindigkeitsfühler 59 in Verbindung. Neben der Fahrgeschwindigkeit verarbeitet der Mikroprozessor 9 noch andere Eingangswerte, die über die Leitungen 51, 52, 53 und 54 vom Fahrer eingegeben werden können. Darüber hinaus kann der Mikroprozessor 9 natürlich noch andere Werte aufnehmen und verarbeiten.

Das Getriebe gemäß Fig. 1 ist bereits bekannt und ist auf den Seiten 49 bis 51 der Zeitschrift "Antriebstechnik" 24 (1985) Nr. 2 näher beschrieben. Auf diese Beschreibung sei ausdrücklich Bezug genommen.

Beim Starten des Fahrzeugs wird, wie bereits erwähnt, mittels der Vorwärtskupplung 11 der Planetenradträger 14 direkt mit der einen Primärscheibe verbunden, oder aber es wird mittels der Rückwärtskupplung 12 das Hohlrad 15 abgebremst, so daß eine Drehrichtungsumkehr erfolgt. In beiden Fällen erfolgt der Antrieb des Primärscheibenpaares 18 im Verhältnis 1:1, d.h. mit der Motordrehzahl.

Je nachdem auf welchem Radius des Primärscheibenpaares das Schubgliederband läuft, erhält man eine unterschiedliche Übersetzung. Wenn das Schubgliederband im Primärscheibenpaar 18 auf dem kleinsten Radius läuft, so ergibt sich die maximale, dem ersten Gang eines Schaltgetriebes entsprechende Übersetzung "low". Zur Veränderung dieser maximalen Übersetzung in Richtung "high", d. h. in Richtung des 6. Gangs bei einem Schaltgetriebe muß die erste Primärscheibe 21 auf die axial stationäre Primärscheibe 22 hin verschoben werden. Dies geschieht dadurch, daß man genau vorbestimmte Ölmengen dem Primärzylinder 25 über Leitung 45 durch das Übersetzungsventil 44 zuführt. Wenn das Schubgliederband 20 auf dem Primärscheibenband 18 auf dem größtmöglichen Radius läuft, dann ist die maximale Übersetzung "high" erreicht. Zwischen diesen beiden extremen Bandstellungen "low" und "high" ist stufenlos jede Übersetzung durch die Verschiebung der ersten Primärscheibe 21 gemäß Pfeil 26 möglich.

Gleichzeitig mit der Verschiebung der ersten Primärscheibe 21 wird auch die zweite oder rechte Sekundärscheibe 24 nachgeführt. Der Sekundärzylinder 27 wird zur Erzeugung der erforderlichen Vorspannkraft und zur Ermöglichung einer schlupffreien Drehmomentübertragung vom Anpressventil 43 über Leitung 49 beaufschlagt, und zwar entsprechend der durch Hebel 55 sowie Elemente 56, 58 und 57 abgefühlten Axialstellung der ersten Primärscheibe 21.

Was die Funktionsweise der elektrohydraulischen Ansteuerung 8 anlangt, so sind drei Hauptfunktionen zu betrachten. Zunächst ist es erforderlich, eine automatische Steuerung der Anfahrkupplung, d. h. der Kupplungsvorrichtung 4 derart vorzusehen, daß Einkupplungsvorgänge sowohl für Teillast als auch für Vollgasstarts garantiert sind.

Damit ein Rutschen des Schubgliederbandes 20 vermieden wird, muß der System- oder Hauptöldruck derart gesteuert werden, daß stets die erforderlichen Einspannkräfte an den Sekundärscheiben 23 und 24 vorhanden sind, so daß die Spannung des Schubgliederbandes erreicht wird. Dies geschieht mittels des erwähnten Anpreßdruckventils 43.

Die dritte Hauptfunktion besteht schließlich darin, eine stufenlose Übersetzungsregelung vorzusehen, und zwar unter Verwendung der Fahr-Pedalstellung und der Motordrehzahl, die als Steuersignale zur Verfügung gestellt werden.

Bei der elektrohydraulischen Ansteuerung 8 gemäß Fig. 1 verarbeitet die Ansteuerelektronik 9 die folgenden Steuergrößen:

1. die Motordrehzahl durch Verwendung des Zündsignals,
2. die Fahrzeuggeschwindigkeit in Form der Motorabtriebswellendrehzahl,
3. die Drosselklappenöffnung gemessen mit Hilfe eines Potentiometers am Vergaser, und
4. die Stellung eines Fahrprogrammschalters.

Während eine übliche, hydraulisch gesteuerte Übersetzungsregelung nur eine Kennlinie im Motorkennfeld ermöglicht, kann (wie in der genannten Zeitschrift "Antriebstechnik" 24 (1985) Nr. 2, S. 49ff beschrieben) bei der Anordnung gemäß Fig. 1 zum Erhalt eines optimalen Kraftstoffverbrauchs die jeweils gewählten Übersetzungen so eingeregelt werden, daß der Motor in seinen besten Betriebspunkten betrieben wird. Beispielsweise können ein "economy" (E) und ein "sport" (S) Programm vorgesehen werden. Der Fahrer kann beispielsweise über die Eingabemittel 1 und z. B. die Leitungen 53, 54 in den Mikroprozessor 9 Informationen eingeben, daß das "E" oder das "S" Programm gewählt wird. Diese Programme sind in der Ansteuerelektronik 9 gespeichert und werden somit bei der Steuerung berücksichtigt.

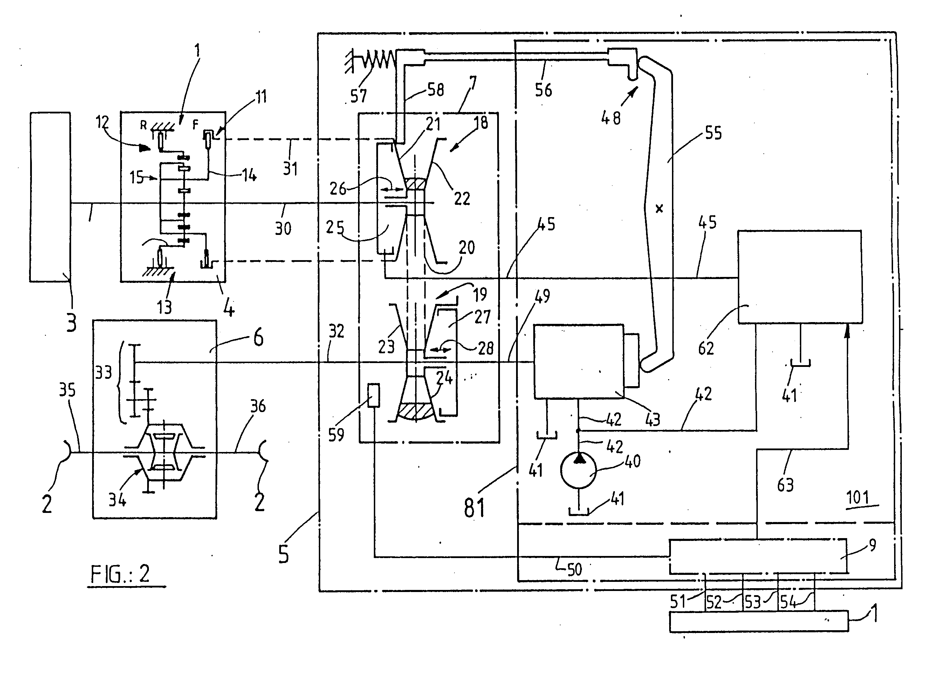

Fig. 2 zeigt ein erstes Ausführungsbeispiel einer Regelgetriebesteuerung 81 mit elektrohydraulischer Ventilanordnung. Hier ist das von der Ansteuerelektronik 9 über eine elektrische Leitung 47 (vgl. Fig.1) und einen Stellmotor betätigte Übersetzungsventil 44 ersetzt durch ein Übersetzungsregelventil 62, und zwar ein vorgesteuertes, elektrohydraulisches Ventil. Insbesondere ist das Übersetzungsregelventil 62 gemäß der Erfindung ein vorgesteuertes elektrohydraulisches Proportional-3-Wegeventil mit Lagerückführung und externem Steuerdruckeingriff. Das Übersetzungsregelventil 62 gestattet eine störgrößenunempfindliche Mengenverstellung in zwei Druchflußrichtungen. Das Übersetzungsventil 62 ist erfindungsgemäß derart ausgelegt, daß es sich bei Stromausfall selbständig verstellt und das stufenlose mechanische Getriebe 7 auf maximale Übersetzung einstellt. Im übrigen ist der Aufbau wie in Fig. 1, wobei eine elektrische Leitung 63 das Ventil 62 mit der Ansteuerelektronik 9 verbindet.

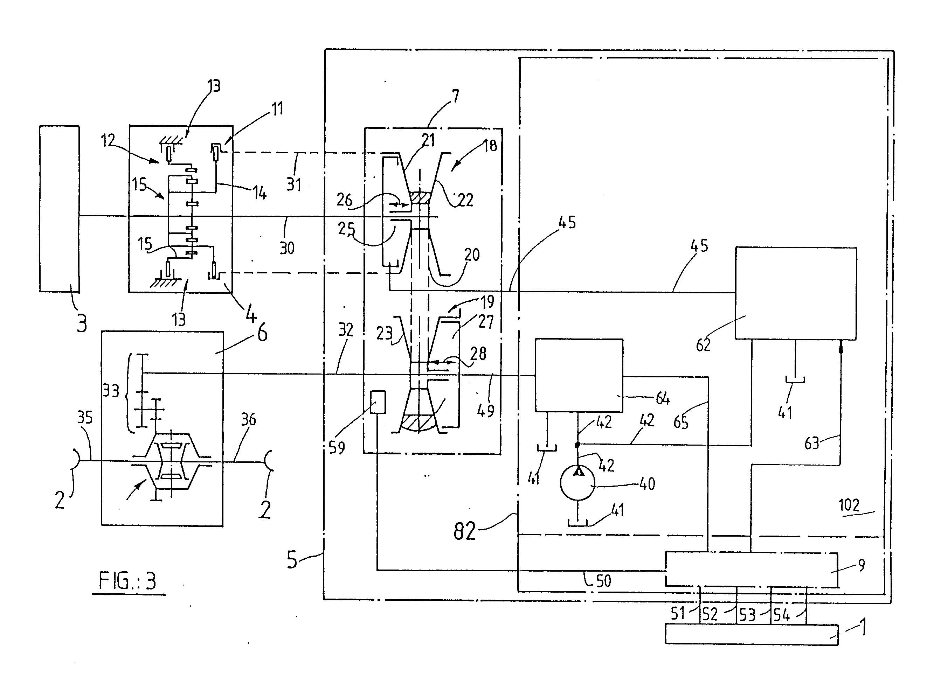

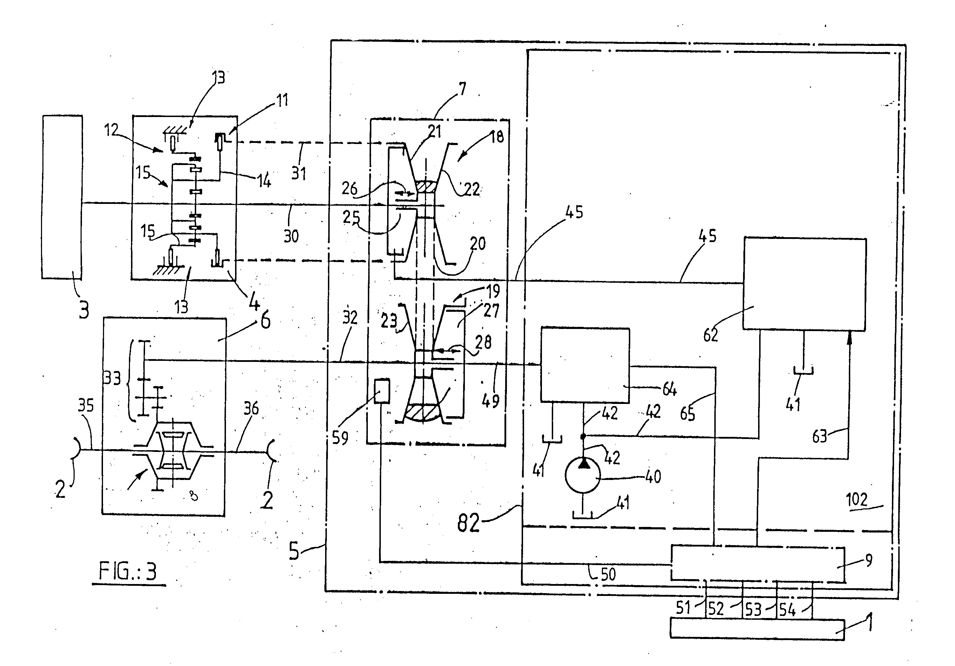

In Fig. 3 ist ein weiteres Ausführungsbeispiel eines elektrohydraulisch angesteuerten stufenlosen mechanischen Getriebes dargestellt. Dieses Getriebe unterscheidet sich in seiner elektrohydraulischen Ansteuerung (Regelgetriebesteuerung) 82 von der Regelgetriebesteuerung 81 gemäß Fig. 2 insbesondere 81 dadurch, daß die elektrohydraulische Ventilanordnung 102 gegenüber der Ventilanordnung 101 verändert ist.

Die elektrohydraulische Ventilanordnung 102 der Fig. 3 weist wie die Anordnung 101 der Fig. 2 ein z.B. von der Ansteuerelektronik (Mikroprozessor) 9 gesteuertes Übersetzungsregelventil 62 auf. Zusätzlich ist noch das Anpreßdruckventil als ein vorgesteuertes elektrohydraulisches Proportionaldruckbegrenzungsventil 64 ausgebildet. Das Ventil 64 wird vom Mikroprozessor 9 über eine elektrische Signalleitung 65 betätigt. Der Mikroprozessor 9 in Fig. 3 nimmt über einen seiner Eingänge 51 bis 54 Information hinsichtlich der durch das Primärscheibenpaar 18 eingestellten Übersetzung auf und liefert ein entsprechendes elektrisches Signal über Leitung 65, um die der vorhandenen Übersetzung entsprechende Anpressung am Sekundärscheibenpaar 19 vorzusehen.

Das Ausführungsbeispiel gemäß Fig. 3 verwendet also sowohl zur Übersetzungsregelung wie auch zur Regelung des Anpreßdrucks am Sekundärscheibenpaar 19 ein elektrohydraulisches Ventil. Vorzugsweise sind die elektrohydraulischen Ventile vorgesteuert.

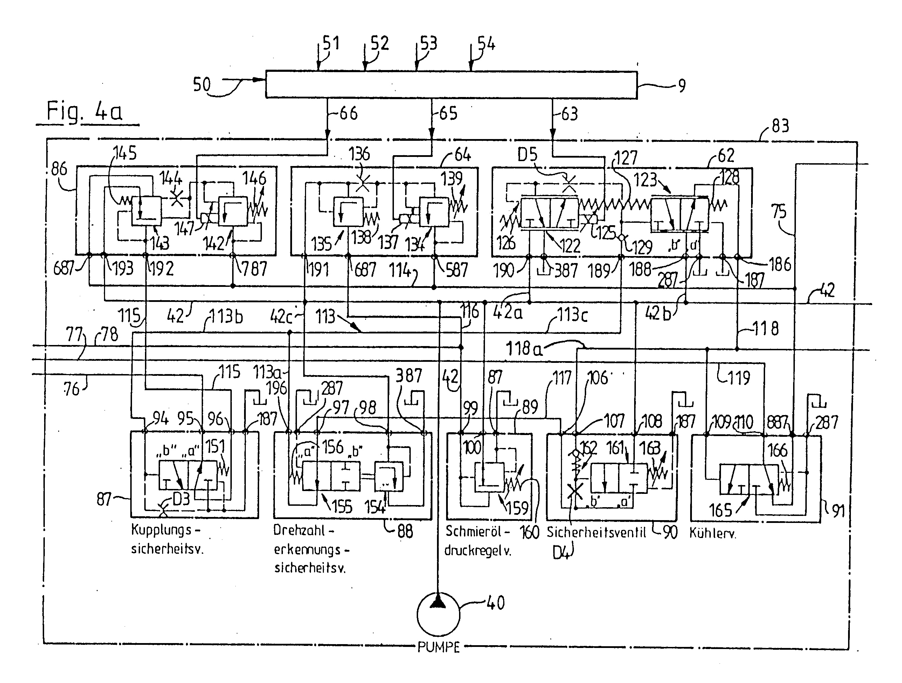

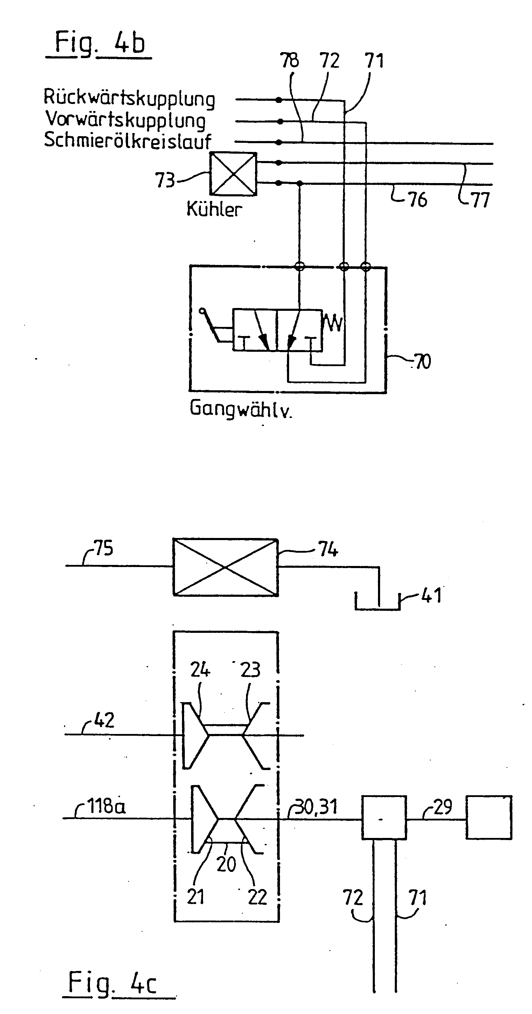

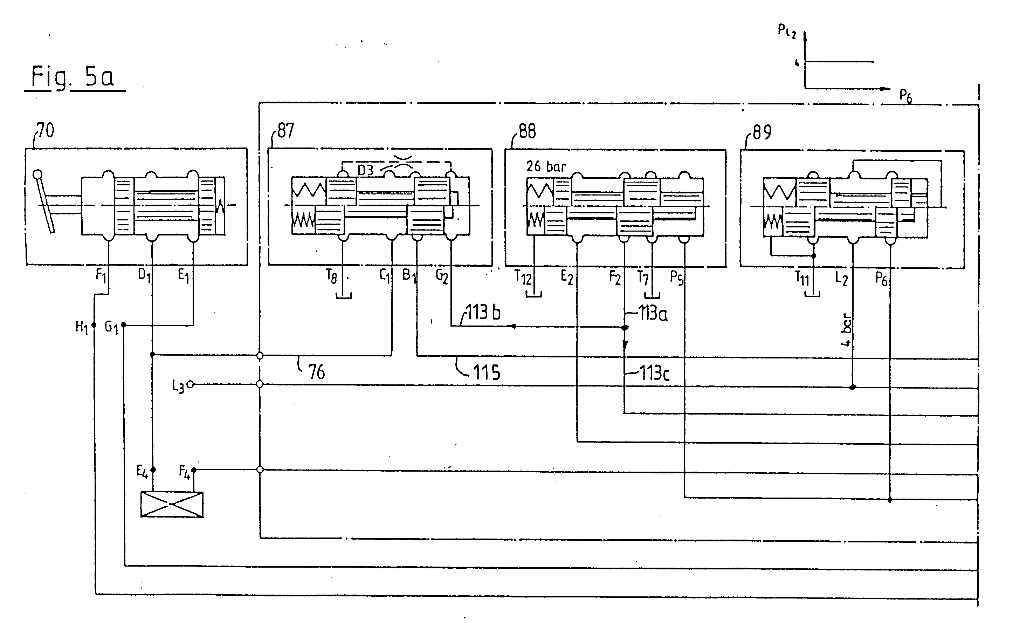

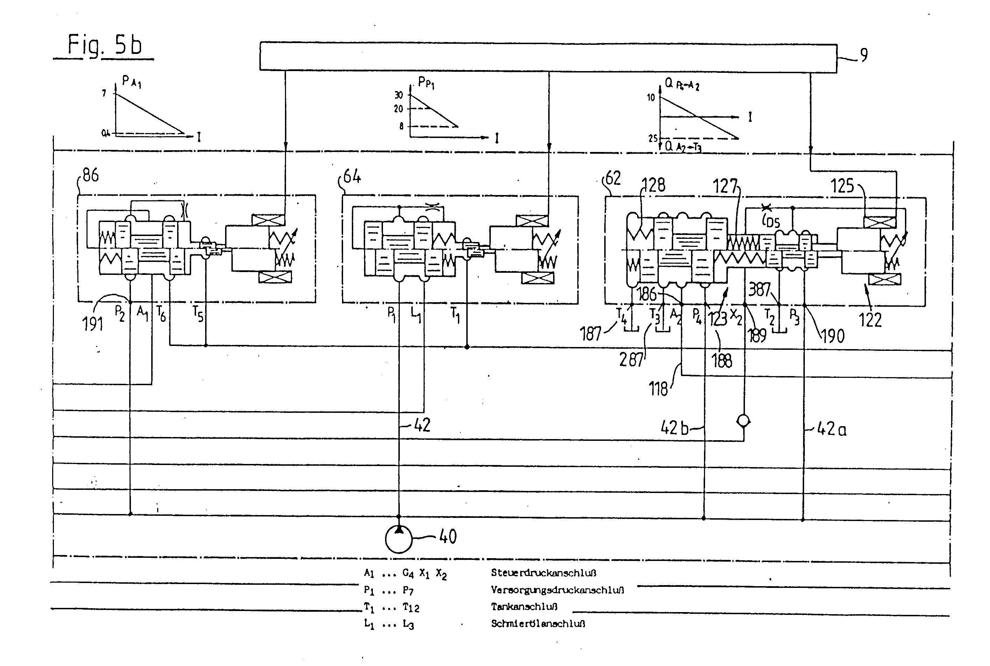

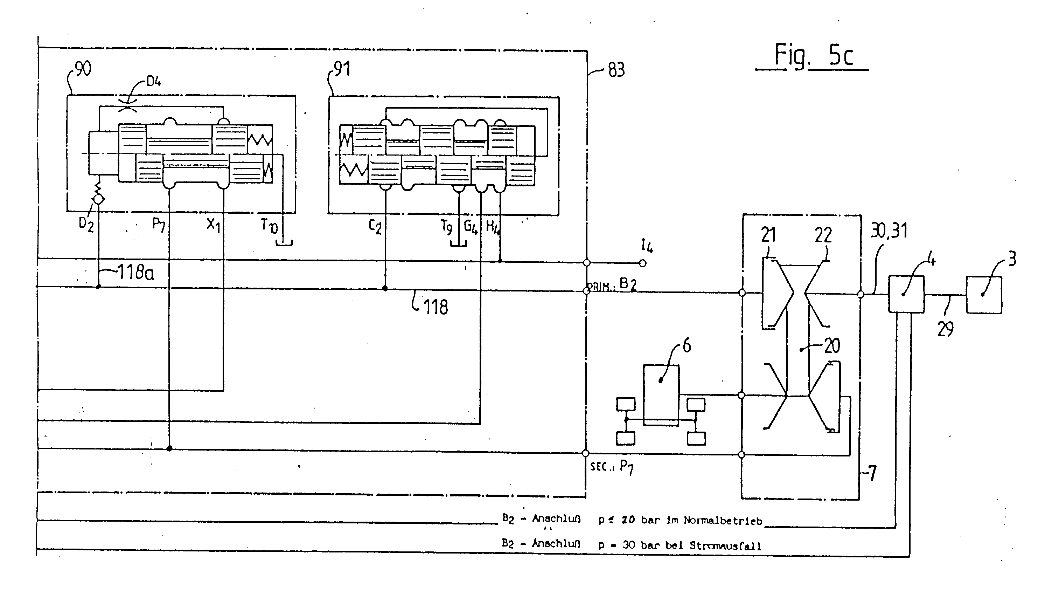

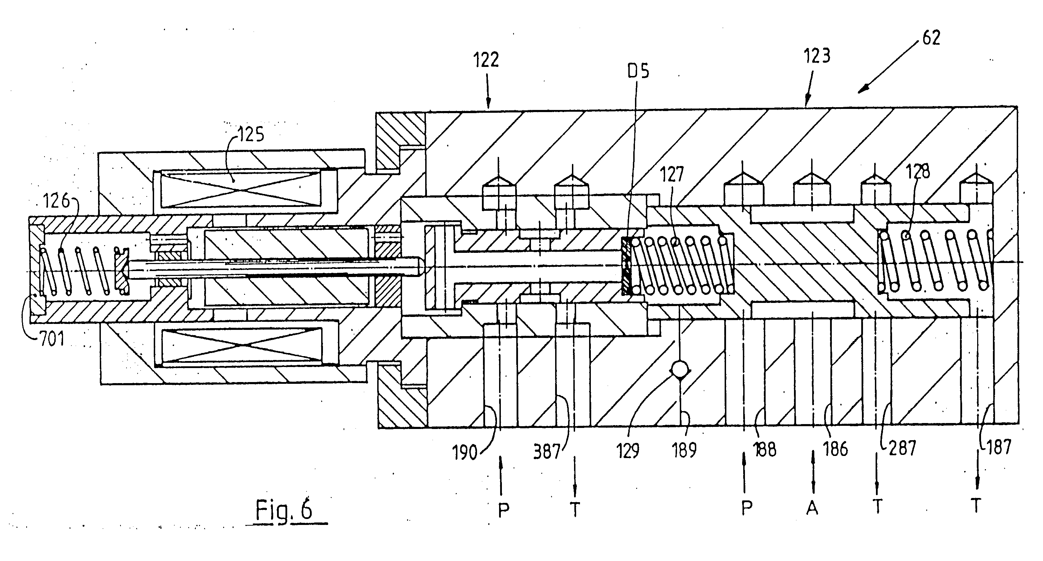

In den Figuren 4 und 5 ist ein weiteres bevorzugtes Ausführungsbeispiel der Erfindung gezeigt. Fig. 4 zeigt dieses Ausführungsbeispiel unter Verwendung von Schaltsymbolen. Fig. 5 zeigt die Ventile im einzelnen. Die Figuren 6 bis 13 beschreiben bevorzugte Ausführungsbeispiele der in Fig. 5 verwendeten Ventile.

Zunächst sei darauf hingewiesen, daß Fig. 4 im Prinzip wie das Ausführungsbeispiel gemäß Fig. 3 aufgebaut ist, und man erkennt dementsprechend den Motor 3, die Kupplungsvorrichtung 4, die Antriebswelle 29, die Abtriebswellen 30,31 und das stufenlose mechanische Getriebe 7. Ferner ist die Ansteuerelektronik (Mikroprozessor) 9 dargestellt und die elektrohydraulische Ansteuerung ist bei diesem Ausführungsbeispiel nicht mit 82, sondern mit 83 bezeichnet. Zusätzlich sind noch ein Kühler 73 und ein Kupplungskühler 74 dargestellt. Ferner ist eine Gangwählvorrichtung 70 vorhanden, die zur manuellen Ansteuerung über Leitungen 71 (für die Rückwärtskupplung) und Leitung 72 (für die Vorwärtskupplung) mit der Kupplungsvorrichtung 4 verbunden ist.

Der prinzipielle Unterschied der elektrohydraulischen Regelgetriebesteuerung 83 gegenüber der elektrohydraulischen Regelgetriebesteuerung 82 besteht darin, daß neben den beiden vom Mikroprozessor 9 angesteuerten Ventilen 62 und 64 noch ein ebenfalls vom Mikroprozessor 9 über eine Leitung 66 angesteuertes Kupplungsansteuerventil 86 vorgesehen ist. Die drei Ventile 62, 64 und 86 sind derart ausgelegt, daß si im Falle eines Stromausfalls jeweils für den Betrieb des Fahrzeugs sichere Positionen einnehmen.

Weiterhin weist die elektrohydraulische Regelgetriebesteuerung 83 gemäß der Erfindung ein Kupplungssicherheitsventil 87 und ein Drehzahlerkennungs-Sicherheitsventil 88 auf. Ferner ist gemäß der Erfindung neben einem Schmieröldruckregelventil 89 ein Sicherheitsventil 90 vorgesehen. Ferner ist ein Kühlerventil 91 vorhanden.

Sämtliche Ventile sind mit mehreren Anschlüssen ausgestattet, die wie folgt bezeichnet sind. Das Übersetzungsregelventil 62 weist einen ersten Verbraucheranschluß 186, einen ersten Tankanschluß 187, einen zweiten Tankanschluß 287, einen ersten Pumpenanschluß 188, einen zweiten Verbraucheranschluß 189, einen dritten Tankanschluß 387 und einen zweiten Verbraucheranschluß 190 auf.

Das Kupplungsansteuerventil 86 weist einen ersten Verbraucheranschluß 587, eine zweiten Verbraucheranschluß 687 und einen Pumpenanschluß 191 auf.

Das Kupplungssteuerventil 86 weist einen ersten Verbraucheranschluß 787, einen zweiten Verbraucheranschluß 192, einen Pumpenanschluß 193 und einen dritten Verbraucheranschluß 687 auf.

Das Kupplungssicherheitsventil 87 weist einen ersten Verbraucheranschluß 94, einen zweiten Verbraucheranschluß 95, einen dritten Verbraucheranschluß 96 und einen Tankanschluß 187 auf.

Das Drehzahlerkennungs-Sicherheitsventil 88 weist einen ersten Verbraucheranschluß 196, einen ersten Tankanschluß 287, einen zweiten Verbraucheranschluß 97, einen zweiten Verbraucheranschluß 98 und einen zweiten Tankanschluß 387 auf.

Das Schmieröldruckregelventil 89 weist einen Verbraucheranschluß 99, einen Pumpenanschluß 100 und einen Tankanschluß 87 auf.

Das Sicherheitsventil 90 weist einen ersten Verbraucheranschluß 106, einen zweiten Verbraucheranschluß 107, einen Pumpenanschluß 108 und einen Tankanschluß 187 auf.

Das Kühlerventil 91 weist einen ersten Verbraucheranschluß 109, einen zweiten Verbraucheranschluß 110, einen dritten Verbraucheranschluß 887 und einen Tankanschluß 287 auf.

Zur Verbindung der Ventile sind im einzelnen die in Fig. 4 gezeigten hydraulischen Leitungen vorgesehen.

Das Übersetzungsregelventil 62 steht mit seinem ersten Verbraucheranschluß 186 mit einer Leitung 118 in Verbindung, die ihrerseits mit dem stufenlosen mechanischen Getriebe 7, und zwar dem ersten (primären) Riemenscheibenpaar, verbunden ist. Die Pumpenanschlüsse 188 und 190 stehen mit der von Pumpe 40 mit Druckmittel versorgten Steuerleitung 42 in Verbindung. Der zweite Verbraucheranschluß 189 steht mit einer Leitung 113 in Verbindung, die ihrerseits mit dem ersten Verbraucheranschluß 94 des Kupplungssicherheitsventils 87 und dem ersten Verbraucheranschluß 196 des Drehzahlerkennungs-Sicherheitsventils 88 verbunden ist.

Der erste Anschluß 587 des Anpreßdruckventils 64 liegt an Leitung 114; letztere steht über Leitung 75 mit dem Kupplungskühler 74 und sodann mit Tank 41 in Verbindung. Der Verbraucheranschluß 687 des Ventils 64 steht über eine Leitung 116 mit dem Verbraucheranschluß 99 des Schmieröldruckregelventils 89 in Verbindung. Die Leitung 116 steht ferner mit der zum Schmierölkreislauf führenden Leitung 78 in Verbindung. Der Pumpenanschluß 191 des Ventils 64 steht mit der Steuerleitung 42 in Verbindung und über eine Leitung 42 C mit dem dritten Verbraucheranschluß 98 des Drehzahlerkennungs-Sicherheitsventils 88.

Das Kupplungsventil 86 liegt über den Anschluß 787 an der Leitung 114 und über Anschluß 687 an Leitung 114. Der Verbraucheranschluß 192 des Ventils 86 steht über Leitung 115 mit dem Verbraucheranschluß 96 des Kupplungssicherheitsventils 87 in Verbindung. Der Pumpenanschluß 193 schließlich ist mit der Steuerleitung 42 verbunden.

Wie bereits erwähnt, steht der Verbraucheranschluß 94 des Kupplungssicherheitsventils 87 über Leitung 113 mit Anschluß 189 des Ventils 62 und Anschluß 196 des Ventils 88 in Verbindung. Der Anschluß 95 des Ventils 87 steht mit dem Kühler 73 über Leitung 76 in Verbindung. Der Anschluß 96 des Ventils 87 ist über Leitung 115 mit dem Anschluß 192 des Ventils 86 verbunden. Der Tankanschluß 187 ist schließlich mit dem Tank verbunden.

Was das Drehzahlerkennungs-Sicherheitsventil 88 anlangt, so ist der erste Verbraucheranschluß 196 mit der Leitung 113 verbunden, die ersten und zweiten Tankanschlüsse 287 bzw. 387 führen zum Tank und der zweite Verbraucheranschluß 97 liegt über eine Leitung 117 am ersten Verbraucheranschluß 106 des Sicherheitsventils 90. Der dritte Verbraucheranschluß 98 des Ventils 88 steht über Leitung 42 C mit der Leitung 42 und somit der Pumpe 40 in Verbindung.

Das Schmieröldruckregelventil 89 steht schließlich mit seinem Verbraucheranschluß 99 über Leitung 116 mit dem Anschluß 687 des Ventils 64 in Verbindung. Der Pumpenanschluß 100 liegt an Leitung 42 und der Tankanschluß 87 ist mit Tank verbunden.

Hinsichtlich des Sicherheitsventils 90 ist noch zu erwähnen, daß der zweite Verbraucheranschluß 107 an Leitung 118 a liegt, während der Pumpenanschluß 108 mit Leitung 42 verbunden ist. Der Tankanschluß 187 ist mit Tank verbunden.

Vom Kühlerventil 91 ist der erste Verbraucheranschluß 109 mit Leitung 118 a verbunden, der zweite Verbraucheranschluß 110 liegt an Leitung 119, die mit Leitung 77 des Kühlers 73 in Verbindung steht. und der Anschluß 887 steht über Leitung 75 mit dem Kupplungskühler 74 in Verbindung, während der Tankanschluß 287 direkt mit Tank verbunden ist.

Weiterhin unter Bezugnahme auf die Figuren 4 und 5, und auch unter allgemeiner Bezugnahme auf die einzelnen in den Figuren 6 bis 13 gezeigten Ventile, sei hinsichtlich deren Aufbau auf folgendes hingewiesen.

Das Übersetzungsregelventil 62 ist zweistufig ausgebildet und weist eine erste oder Vorsteuerstufe 122 und eine Hauptstufe 123 auf. In Fig. 5 ist in der oberen Hälfte der Ventildarstellungen der stromlose Zustand und unten der erregte Zustand gezeigt. Ferner ist in Fig. 5 für die Ventile 62, 64 und 86 abhängig vom Erregungsstrom I die Steuergröße Q bzw. P dargestellt. Für das Ventil 89 ist die Abhängigkeit des Drucks an den beiden Verbraucherausgängen veranschaulicht.

Was das Übersetzungsregelventil anlangt, so ist zwischen dem Kolben des Vorsteuerventils und des Hauptventils eine Feder 127 angeordnet. Der Kolben des Vorsteuerventils steht ferner unter dem Einfluß einer Feder 126 und dem Einfluß der Erregerwicklung 125. Das Hauptventil 123 wird durch eine Feder 128 in die gezeigte Stellung a vorgespannt. Der bei 189 anstehende Druck kann über ein Rückschlagventil 129 zum einen auf den Kolben des Hauptventils einwirken und zum anderen über eine Drossel D5 auf den Kolben des Vorsteuerventils gleichwirkend mit der Feder 126. Es wird dabei eine Zweikantenschiebervorsteuerung und ein Zweikantenschieberhauptkolben verwendet. Die Aufgabe des Übersetzungsregelventils besteht darin, die Übersetzungsregelung vorzunehmen, und zwar durch eine kontinuierliche Kegelscheibenverstellung in zwei Richtungen. Hydraulisch wird dies durch eine störgrößenunempfindliche Mengenverstellung in zwei Durchflußrichtungen erreicht. Als Notfunktion ist vorgesehen, daß bei Stromausfall eine selbständige Verstellung auf maximale Übersetzung erfolgt. Ein Anschluß für externen Eingriff auf die Hauptstufe ist über das Rückschlagventil 129 möglich.

Das Systemdruckregelventil 64 weist eine Vorsteuerstufe 134 und eine Hauptstufe 135 auf. Praktisch ergibt sich ein vorgesteuertes elektrohydraulisches Proportionaldruckbegrenzungsventil mit Einkantenschiebervorsteuerung und Einkantenschieberhauptstufe. Im einzelnen weist die Vorsteuerstufe 134 einen Erregermagneten 137 mit entgegengesetzt zu diesem wirkender Feder 139 auf. Die Hauptstufe besitzt eine Feder 138 und eine Drossel 136. Durch das Systemdruckregelventil 64 wird eine stufenlose Veränderung des Anpreßdrucks der Gliederkette 20 an die Kegelscheiben erreicht. Dies geschieht hydraulisch durch eine Druckregelung, wobei als Notfunktion bei Stromausfall sich der maximale Regeldruck ergibt.

Das Kupplungssteuerventil 86 ist ein vorgesteuertes elektrohydraulisches Proportionaldruckregelventil mit einer Einkantenschiebervorsteuerung 142 und einer Zweikantenschieberhauptstufe 143. Die Vorsteuerstufe 142 weist einen Elektromagneten 147 sowie diesem entgegenwirkend eine Feder 146 auf. Die Hauptstufe sieht einen Kolben unter dem Druck einer Feder 145 vor und ferner eine Drossel 144.

Das Kupplungsansteuerventil 86 sieht ein weiches Ein- und Auskuppeln der Fahrkupplung vor und realisiert dies hydraulisch durch eine Druckregelung. Als Notfunktion ist bei Stromausfall maximaler Druck vorgesehen, d.h. die Kupplung ist geschlossen.

Das Kupplungssicherheitsventil 87 kann zwei Stellungen a und b einnehmen und wird durch eine Feder 151 in die Stellung a vorgespannt. Eine Düse D3 liegt zwischen Anschluß 94 und 187 in der gezeigten Weise.

Das Drehzahlerkennungs-Sicherheitsventil 88 weist die beiden Stufen 154 und 155 auf. Zwei Schaltzustände a und b sind vorgesehen, wobei eine Feder 156 das Ventil zum Schaltzustand a hin vorspannt.

Das Schmieröldruckregelventil 89 ist ein übliches Druckregelventil 59 welches durch eine Feder 160 belastet ist.

Das Sicherheitsventil 90 weist ein Zweiwegeventil 161 auf und ist zum einen von einer Feder 163 belastet und steht andererseits mit einem Vorspannventil 162 in Verbindung, wobei ferner eine Drossel D4 in der gezeigten Weise vorhanden sind. Das Zweiwegeventil als solches ist mit 161 bezeichnet.

Das Kühlerventil 91 weist ein Vier/Zweiwegeventil 165 auf und ist durch eine Feder 166 in den gezeigten Zustand vorgespannt.

Bevor auf einige der Ventile im einzelnen näher eingegangen wird, sei darauf hingewiesen, daß die Figur 5 den gleichen Sachverhalt wie die Fig. 4 darstellt. Allerdings sind an den Anschlüssen der verschiedenen Ventile in Fig. 5 die dort auftretenden Größen angegeben, z.B. Druck P2 am Anschluß 191 usw. Auch für das Ventil 62 sind einige der Anschlußbezugzeichen der Fig. 4 in die Fig. 5 übertragen worden.

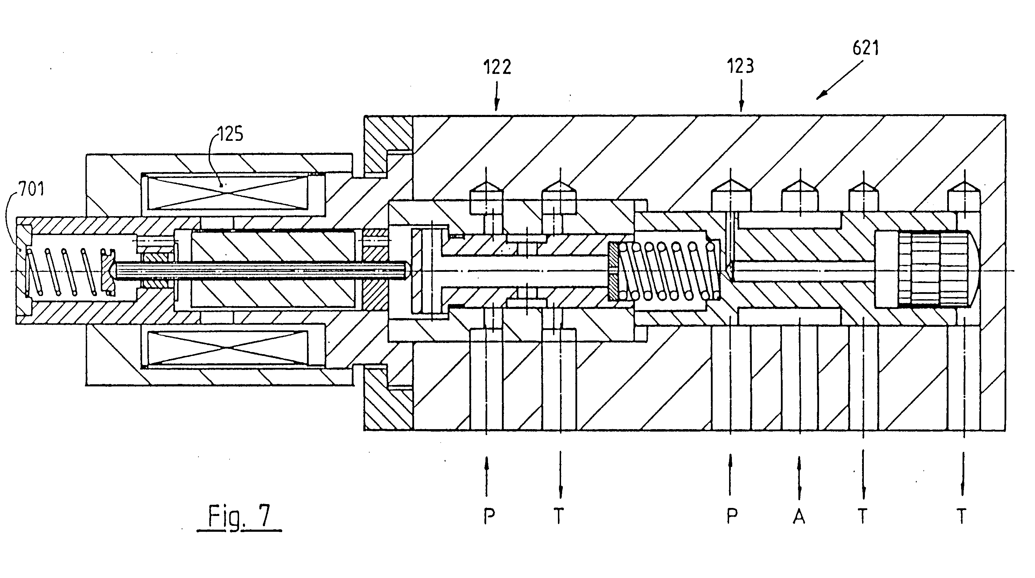

In Fig. 6 ist im Schnitt eine erste Version eines Übersetzungsregelventils 62 dargestellt , und Fig. 7 zeigt eine zweite Version des Übersetzungsregelventils 62′.

In die Fig. 6 wurden die Bezugszeichen der Fig. 4 übernommen, so daß hier das Übersetzungsregelventil 62 nur noch kurz beschrieben werden muß. Man erkennt den Vorsteuerkolben mit der in einem Plättchen angeordneten Blende D5 sowie den Hauptsteuerkolben, der sich über eine Feder 128 am Gehäuse des Ventils 62 abstützt. Die von der Feder 126 auf die Ankerstange ausgeübte Kraft läßt sich durch Verstellen der Einstellscheibe 701 verändern.

Das Übersetzungsregelventil 62 ist für nichterregten Mangneten 125 dargestellt, d.h. es ergibt sich eine eindeutige Sicherheitsstellung bei Stromausfall: Der Hauptkolben befindet sich in der Stellung "P-A, Verbindung offen", d.h. es ergibt sich maximale Getriebeübersetzung.

Anschluß für externen Steuerdruckeingriff, mit externem Drucksignal, Umschaltung der Hauptkolbenstellung in "Verbindung A-T offen" (minimale Getriebeübersetzung).

Fig. 6 zeigt die erste Ausbildungsvariante, bei der sich der Hauptkolben auf einer Feder 128 abstützt. Die Fig. 7 zeigt die zweite Variante, bei der sich der Hauptkolben gegen Druck abstützt. Die Realisierung erfolgt durch einen zweiten Kolben mit halber Nennfläche, geführt im Hauptkolben, Druckbeaufschlagung durch Bohrung mit Eingangsdruck. Folgender Vorteil ergibt sich: Gleichzeitiges Anwachsen von Steuerdruck und Stellkräften mit dem Eingangsdruck.

Für die beiden Varianten gilt: Störkraftkompensation durch Kraftvergleich zwischen Koppelfeder 127 und Magnetkraft. Axialtoleranzausgleich durch Einstellschraube 701 am Magnet. Axialtoleranzunempfindlichkeit durch Feinsteuertaschen. Bessere Auflösung, bessere Kennlinienreproduzierbarkeit bei gegossenen Steuerkanten. Kennliniensymmetrie, Kennlinienanpassung durch Variation der Anzahl der Feinsteuertaschen. Filterung gegen Feinstverschmutzung des Kegelscheibenabriebes.

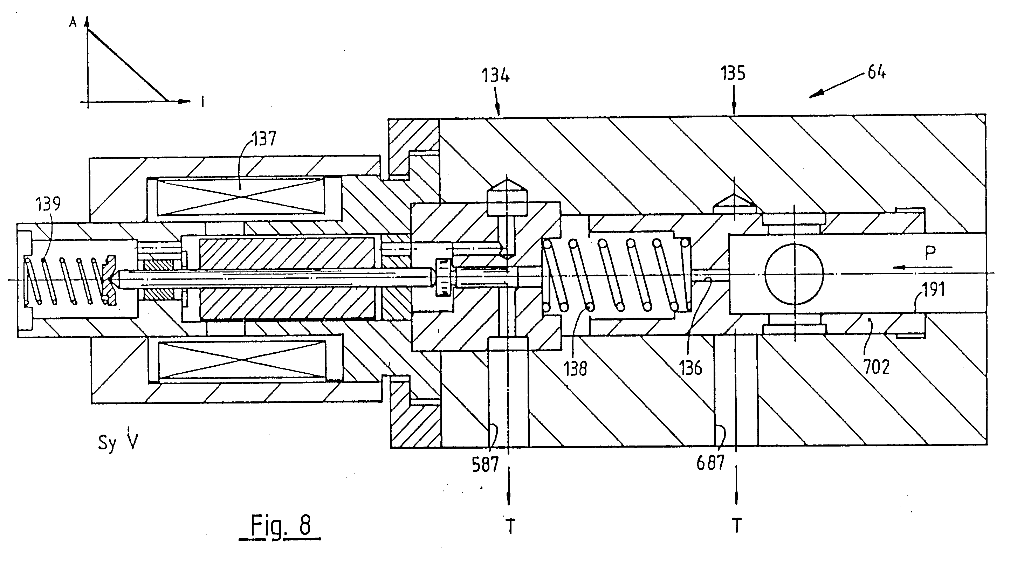

Fig. 8 zeigt das Systemdruckregelventil 64, wobei hier wiederum die Bezugszeichen der Fig. 4 übernommen wurden. Der maximale Regeldruck beträgt hier 30 Bar. Es ergibt sich wiederum eine eindeutige Sicherheitsfunktion bei Stromausfall. Durch den Schiebekolben 702 wird eine Einkantenvorsteuerung vorgesehen. Eine Druckanpassung ist durch Reduzierung, Erhöhung der Kolbenfläche möglich. Axialtoleranz-Kennlinienanpassung durch Justierung der Magnetfeder 139. Die Filterung des Magnetraums gegen Abrieb des Kegelscheibengetriebes ist vorgesehen.

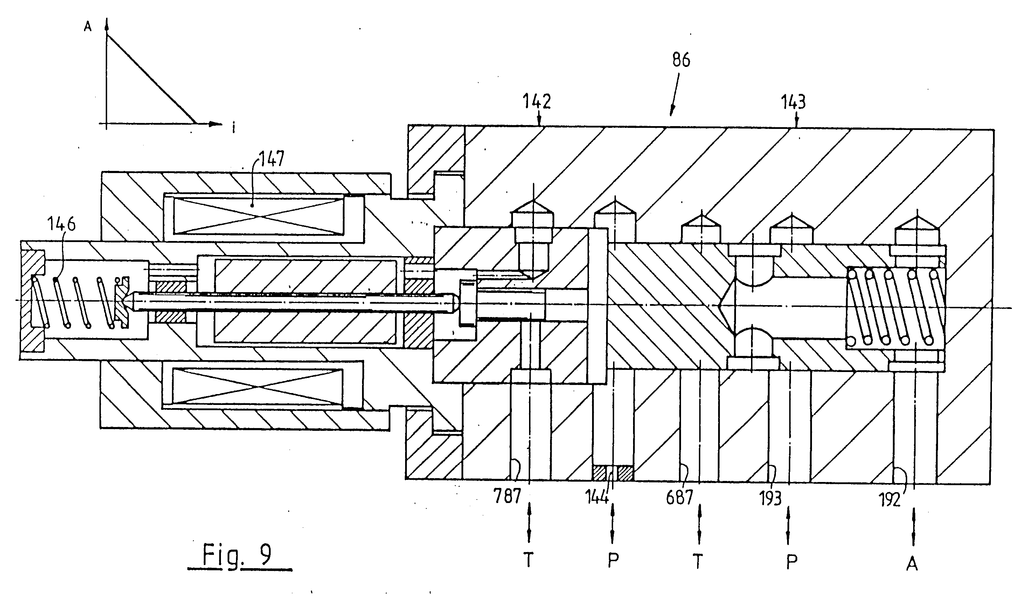

Fig. 9 zeigt das Kupplungsansteuerventil 86, wobei wiederum die Bezugszeichen der Fig. 4 eingetragen wurden. Auch dieses Ventil hat eine eindeutige Sicherheitsfunktion bei Stromausfall. Der maximale Regeldruck beträgt 7 Bar. Kennlinienanpassung, Axialtoleranzausgleich durch Magnetfederjustierung ist möglich.

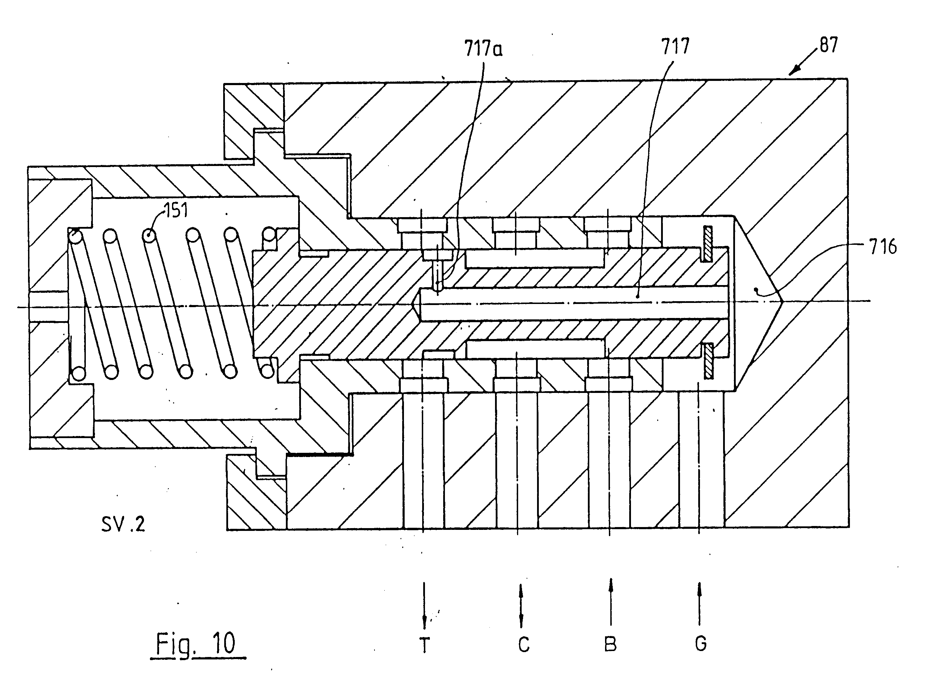

Fig. 10 zeigt das Kupplungssicherheitsventil 87 in seiner Stellung a. Das Kupplungssicherheitsventil 87 ist als ein 3/2-Wegeventil ausgebildet und weist einen Steuerraum 716 auf, der über eine gedrosselte Kolbenbohrung 717, 717a in dauernder Verbindung mit dem Tankanschluß T steht. Das Kupplungssicherheitsventil besitzt hohe Stellkräfte und ist auch bei Verschmutzung funktionssicher. Es erfolgt die selbständige Kolbenrückstellung nach Sperrung des Steuersignals durch die Entlastungsbohrung (Düse 717a) zum Tankanschluß. Das Ventil kann als fertig geprüfte Einheit vorgesehen werden. Eine Nachjustierung ist weder notwendig noch möglich.

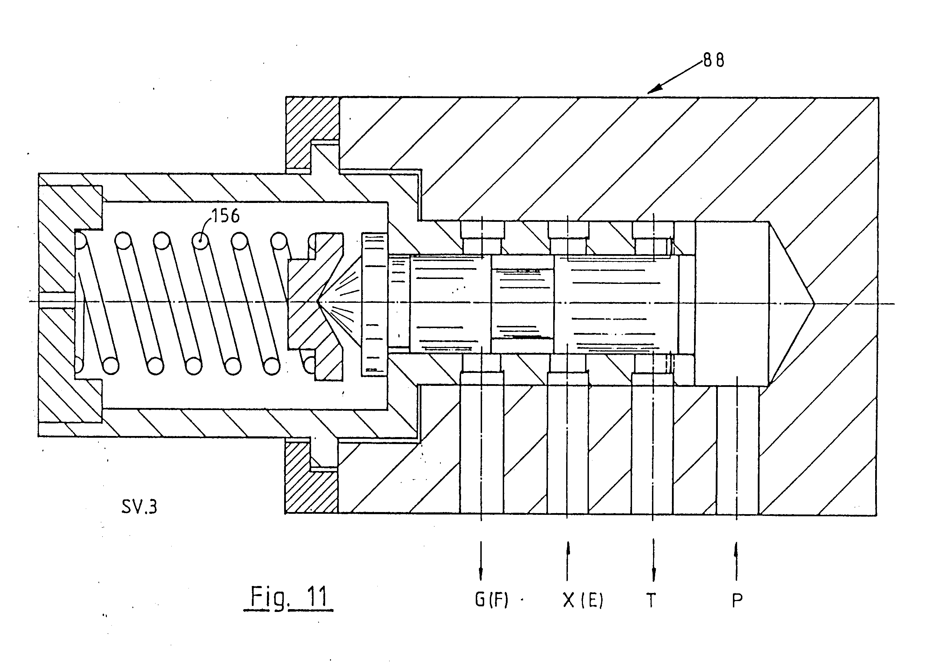

Fig. 11 zeigt das Drehzahlerkennungs-Sicherheitsventil 88, welches als volumenstromabhängiges 2/2-Wegeventil ausgebildet ist, das bei Überschreiten einer bestimmten Drehzahl (Volumenstrom, Position des Kolbens) den Strompfad (X,G) für die Steuerflüssigkeit unterbricht.

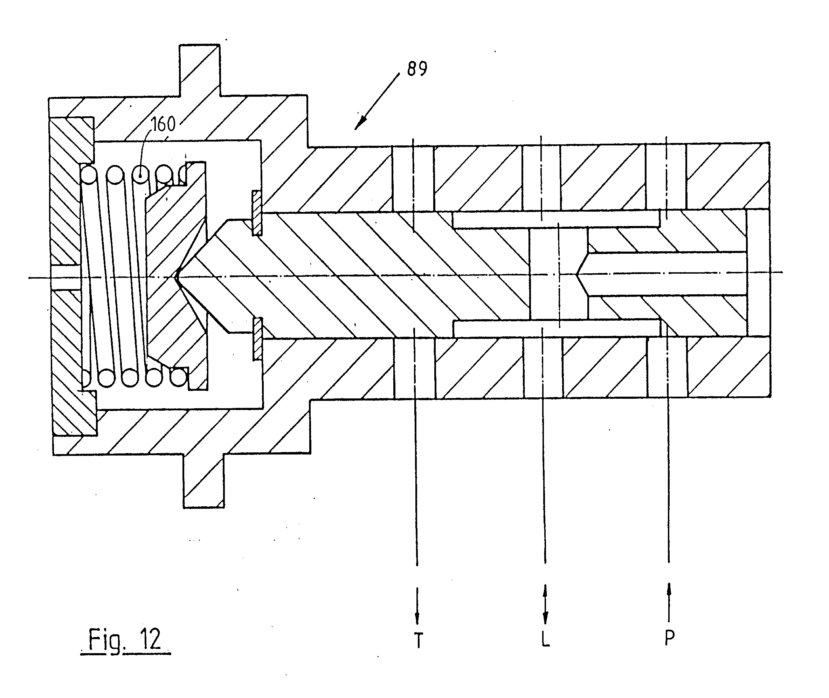

Fig. 12 zeigt das Schmieröldruckregelventil 89. Seine Arbeitsweise ist dem Fachmann ohne weiteres ersichtlich.

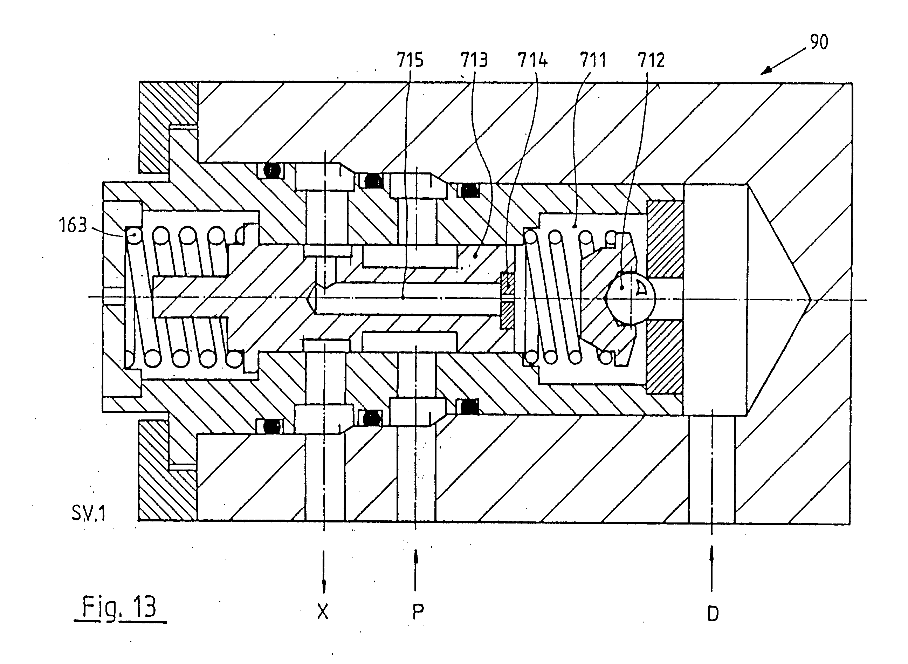

Fig. 13 zeigt im Längsschnitt das Sicherheitsventil 90 in der Form eines federbelasteten 2/2-Wegeventils. Gegenüber der Feder 163 ist ein Steuerraum 711 ausgebildet, der über ein federbelastetes Rückschlagventil 712 mit der Steuerleitung D verbunden ist. Im geschalteten Zustand des Steuerkolbens 713 des Sicherheitsventils 90 ist der Steueranschluß X mit dem Druckanschluß P verbunden. Die Verbindung des Steuerraums 711 mit dem Steueranschluß X erfolgt über eine mit einer Drossel 714 versehene Kolbenbohrung 715.

Das Sicherheitsventil 90 ist im Normalbetrieb durch Schwellwertmessung nicht in Funktion. Bei Überschreiten des Schwellwerts erfolgt die Öffnung des Rückschlagventils, das Durchschalten des Kolbens und die Durchschaltung des Systemdrucks P auf den Steueranschluß X. Es besteht eine Selbsthaltefunktion über den Systemdruck P, d.h. auch bei abfallendem Druck an D wird die Verbindung P-X aufrechterhalten. Die Düse (Drossel 714) im Kolben 713 ist so bemessen, daß der Druckaufbau vor dem Kolben möglich ist und die Durchflußmenge für die Selbsthaltefunktion gewährleistet. Es ergibt sich kein ungewollter Druckaufbau in der Ansteuerkammer durch Leckage, da die Verbindungsbohrung X-Anschluß besitzt. Die Bemessung der Kolbendurchmesser und Federkräfte erfolgt derart, daß große Stellkräfte auch bei extrem verschmutztem Ventil eine Schaltfunktion sichern. Das erfindungsgemäße Sicherheitsventil hat eine kurze Ansprechzeit und kann als fertig geprüfte Einheit vorgesehen werden, so daß eine Nachjustierung nicht mehr notwendig und auch nicht mehr möglich ist.

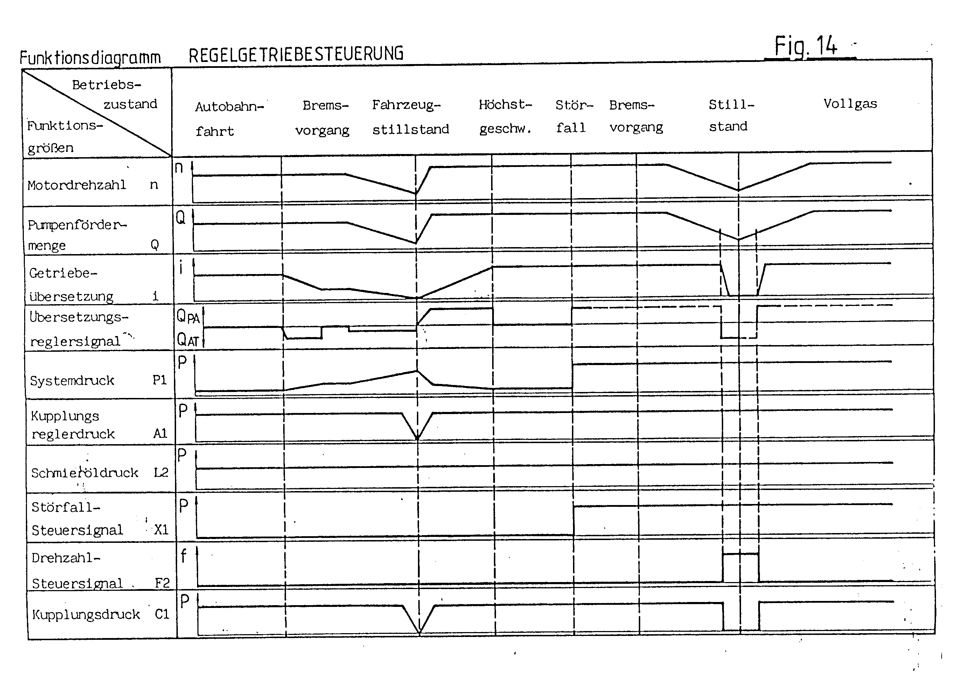

Im folgenden sei die Regelgetriebesteuerung-Wirkungsweise beschrieben, wobei auch auf Fig. 14 und 15a und 15b hingewiesen sei.

Das Steueröl für die Regelgetriebesteuerung 83 liefert die Pumpe 40, die mit der Antriebsmaschine 3 gekoppelt ist. Die Fördermenge der Pumpe 40 steht damit im unmittelbaren Zusammenhang mit der Drehzahl der Antriebsmaschine 3. Das von der Pumpe 40 geförderte Steueröl wird über die Steuerleitung 42 dem Kupplungsansteuerventil 86, dem Systemdruckregelventil 64 und dem Übersetzungsregelventil 62 zugeführt. Bei dem Übersetzungsregelventil 62 erhält sowohl das Vorsteuerventil 122 als auch das Hauptventil 123 über die Leitungszweige 42a, 42b das Steueröl zugeführt. Vom Übersetzungsregelventil 62 führt die Steuerleitung 118 zur Anstelleinrichtung (Primärzylinder 25 in Fig. 3) des mit der Antriebsmaschine 3 verbundenen Kegelscheibenpaares 18 und verändert je nach eingestelltem Steuerdruck entsprechend der gewünschten Übersetzung den Abstand der beiden Kegelscheiben 21, 22 zueinander und damit die radiale Lage der das Drehmoment übertragenden Getriebekette (Schubgliederband) 20. Der sekundärseitig auf das Kegelscheibenpaar 23,24 wirkende Steuerdruck wird gerade so hoch gehalten, daß ein Schlupf zwischen Getriebekette 20 und dem Kegelscheibenpaar unterbunden wird. Das Kupplungsansteuerventil 86 sowie das Systemdruckregelventil 64 sind bei Ausfall der Vorsteuerventile 142 bzw. 134 infolge Stromausfall jeweils auf ihren Maximaldruck eingestellt. Das Übersetzungsregelventil 62 ist bei Stromausfall am Ansteuermagneten 125 des Vorsteuerventils 122 in der gezeigten Durchgangsstellung a geschaltet, so daß in der Steuerleitung 118 und damit auch im Steuerleitungsbereich 118a der Systemdruck herrscht. Der Systemdruck öffnet das Vorspannventil 162 und verschiebt das Sicherheitsventil 90 aus der gezeigten geschlossenen Schaltstellung a in die Durchgangsschaltstellung b durch Überwindung der Kraft der Feder 163. Damit steht der Steuerdruck auch über die Steuerleitung 117 am Drehzahlerkennungssicherheitsventil 88 an.

Solange die Antriebsmaschine 3 und damit auch die Pumpe 40 eine bestimmte Drehzahl nicht unterschreitet, befindet sich das Drehzahlerkennungssicherheitsventil 81 in der Schaltstellung b. In dieser Schaltstellung ist die Weiterleitung des in der Steuerleitung 117 infolge des durchgeschalteten Sicherheitsventils wirkenden Steuerdruckes unterbrochen. Wird beispielsweise durch einen Bremsvorgang die Motordrehzahl und damit auch die Drehzahl der Pumpe 40 zurückgenommen, schaltet das Drehzahlerkennungssicherheitsventil 88 infolge der Kraft der Feder 156 in die dargestellte Schaltstellung a und leitet damit den in der Steuerleitung 117 wirkenden Steuerdruck über die Leitungsabschnitte 113a, 113b, 113c zum Kupplungssicherheitsventil 87 und gleichzeitig in den Steuerraum des Hauptventils 123 des Übersetzungsregelventils 62. Dadurch verschiebt sich das Kupplungssicherheitsventil aus seiner Schaltstellung a in die Schaltstellung b und verbindet die zur Kupplung führende Steuerleitung 76 mit dem Tank, so daß die Kupplung lüftet. Gleichzeitig wird das Hauptventil 123 des Übersetzungsregelventils 62 aus der Schaltstellung a in die Schaltstellung b verschoben, in der die den Primärkreis bildenden Steuerleitungen 118, 118a mit dem Tank verbunden sind. Dies bedeutet, daß nunmehr in der Steuerleitung 118, 118 a Tankdruck herrscht, so daß die Kegelscheiben 21,22 auf ihr Größtmaß auseinander gezogen werden und damit die Getriebekette 20 auf den kleinsten Durchmesser mit den Berührungsflächen des Kegelscheibenpaares 21, 22 in Kraftschluß steht. Dies entspricht der kleinsten Übersetzung des Getriebes. Obwohl nun in der Steuerleitung 118a Tankdruck herrscht, bleibt das Sicherheitsventil 90 in Schaltstellung b, da der Steuerraum über die Drossel D4 mit der Steuerleitung 117 verbunden ist. Wird durch die Betätigung des Gaspedals die Motordrehzahl und damit auch die Drehzahl der Pumpe 40 wieder angehoben schaltet das Drehzahlerkennungsventil 88 infolge des Druckaufbaus entgegen der Kraft der Feder 156 in die Schaltstellung b. Damit wird die Verbindung der Steuerleitung 113 mit der Steuerleitung 117 unterbrochen, so daß sich der Druck in den Steuerleitungen 113a,b,c über die Drossel D3 im Kupplungssicherheitsventil 87 abbaut. Dadurch schaltet das Kupplungssicherheitsventil 87 aus der Schaltstellung b mittels der Kraft der Feder 151 in Schaltstellung a, in der die zur Kupplung führende Steuerleitung 76 wieder mit der Ausgangsleitung 115 des Kupplungsansteuerventils 86 in Verbindung steht. Damit wird die Kupplung wieder geschlossen.

Die Regelgetriebesteuerung fährt nunmehr zunächst mit der eingestellten kleinen Übersetzung, bis infolge des Steuerdruckabbaues über die Drossel D5 im Steuerraum des Übersetzungsregelventils 62 dessen Hauptventil 123 aufgrund der Kraft der Feder 128 wieder in die gezeigte Ausgangsstellung a zurückgeschoben wird, in der der Primärkreis wieder mit dem Sekundärkreis in Verbindung steht und damit infolge des auch im Primärkreis wirkenden Sekundärsteuerdrucks das Getriebe wieder auf maximale Drehzahlübersetzung umgesteuert wird, so daß sich die Abtriebsdrehzahl wieder erhöht. Ein Lüften der Kupplung und Umschalten des Übersetzungsregelungsventils 62 ist somit, da sich das Drehzahlsteuerungsventil in Schaltstellung b befindet, zunächst nicht möglich. Erst wenn eine erneute Bremsung stattfindet und das Drehzahlerkennungsventil 88 wieder zurück in die Schaltstellung a schaltet, kann sich das Spiel in der vorbeschriebenen Weise wiederholen.

Abschließend kann zur Wirkungsweise festgestellt werden:

Sobald der Strom für die vorgesteuerten Ventile ausfällt, wird das Getriebe automatisch, also ohne Einwirkung von außen auf max. Übersetzung verstellt. Beim Bremsen erfolgt eine Verstellung auf minim. Übersetzung und gleichzeitig Entkupplung. Sobald die Drehzahl des Motors wieder erhöht wird, erfolgt wieder die Kupplung, und zwar bei kleinster Übersetzung und anschließend ein Umschalten auf größere Übersetzung.

Auf den beiden folgenden zusammengehörenden Seiten ist für ein Ausführungsbeispiel die Funktonsbeschreibung zusammengefaßt.

FUNKTIONSBESCHREIBUNG    ELEKTROHYDRAULISCHE REG GETRIEBESTEUERUNG

| Betriebszustand | Ventil Übersetzungs-Regelventil | Systemdruck-Regelventil | Kupplungsan-ansteuerventil |
|---|---|---|---|
| Norm. Fahrzustand Hohe Geschwindigkeit | Regelbereich Max. Übersetzung $Q \approx 0$, Dyn. $Q_{PA} \rightarrow 10\%$ | Regelbereich Niedriger Systemdruck 8 bar | Kein Ansteuersig Voller Kupplungs 7 bar |
| Norm. Fahrzustand Niedrige Geschwindigkeit | Regelbereich, bei Verzögerung, Übersetzungs-nachregelung, $Q_{AT} > 0$ | Regelbereich Hoher Systemdruck 20 bar | Entkupplungsvorg 7 - 0 bar |
| Norm. Fahrzustand Stillstand | Regelbereich Übersetzung, Minimal $Q \approx 0$ | Regelbereich Hoher Systemdruck 20 bar | Entkuppelt 0 bar |
| Störfall Hohe Geschwindigkeit | Sicherheitsunktion Ventil öffnet Verbindung $Q_P \rightarrow A$ | Sicherheitsfunktion Hoher Systemdruck 30 bar | Sicherheitsfunkt Kein Ansteuersig 7 bar |
| Störfall Niedrige Geschwindigkeit | Sicherheitsfunktion Störfall-Steuerdruck Schaltet Hauptkolben Übersetzung minimal | Sicherheitsfunktion Hoher Systemdruck 30 bar | Sicherheitsfunkt 7 bar |
| Störfall Stillstand | ⇡ | Sicherheitsfunktion Hoher Systemdruck 30 bar | Sicherheitsfunkt 7 bar |
| Störfall Anfahren | Sicherheitsfunktion Störfall-Steuerdruck durch DCSV abgeschaltet max. Übersetzung | Sicherheitsfunktion Hoher Systemdruck 30 bar | Sicherheitsfunkt 7 bar |

EP 0 324 928 B1

| Schmieröl-Druckregler | Sicherheitsventil | Drehzahlerkennungs-sicherheitsventil | Kupplungs-Sicherheitsventil |
|---|---|---|---|
| Konstant-Druck 4 bar | Nicht aktiviert Kein Störfall-Steuersig. | Ventilkolben in Bewegung Kein Druck im Steuer-Eingang | Nicht Aktiviert Kein St-Steuersignal, Kupplungsansteuerventil-druck ist durchgesch. |
| Konstant-Druck 4 bar | Nicht aktiviert Kein Störfall-Steuersig. | Ventilkolben öffnet, kein Druck im Steuer-kreis | ↑ |
| Konstant-Druck 4 bar | nicht aktiviert kein Störfall-Steuersig. | Ventilkolben hat geöffnet Kein Druck im Steuerkreis | ↑ |
| Konstant-Druck 4 bar | Ventil aktiviert, Störfall-Steuersignal in Höhe des Systemdrucks | P > 23 bar Steuerkante geschlossen vorh. St-Steuerdruck wird nicht durchgesch. | Nicht aktiviert, da Drehzahlerkennungs-SV St-Steuerdruck sperrt |
| Konstant-Druck 4 bar | Ventil aktiviert, Selbst-Haltefunktion Störfall-Steuersignal in Höhe d. Systemsdrucks | Steuerkante öffnet St-Steuerdruck wird ab n = 1700 durchgesch. | Von St-Steuersignal aktiviert, Kupplungsansteuerdruck wird gesperrt |
| Konstant-Druck 4 bar | ↑ | Voller St-Steuerdruck wird zu Kupplungs-sicherheitsventil durchgeschaltet | Von St-Steuersignal aktiviert, Kupplungsansteuerdruck ist gesperrt |
| Konstant-Druck 4 bar | ↑ | Steuerkante schließt St-Steuersignal wird gesperrt | nicht mehr aktiviert Kupplungsansteuer-druck wird durchgesch. |

## Patentansprüche

1. Elektro-hydraulische Getriebesteuerung für ein mechanisch betätigbares Getriebe (5), bestehend aus einer steuerbaren Kupplungsvorrichtung (4) und einem stufenlos regelbaren, mechanischen Getriebe (7)

12

mit einer sich anschließenden Antriebsvorrichtung (6), wobei die Kupplungsvorrichtung (4) eine Vorwärtskupplung (11) und eine Rückwärtskupplung (12) in Verbindung mit einem Umschalt-Planetenradsatz und das stufenlos regelbare mechanische Getriebe (7) ein Primärscheibenpaar (18) und ein Sekundärscheibenpaar (19) verbunden über ein Schubgliederband (20) aufweist, wobei dem Primärscheibenpaar (18) ein mit Druckmittel beaufschlagbarer, die Übersetzung steuernder Primärzylinder (25) und dem Sekundärscheibenpaar (19) ein mit Druckmittel beaufschlagbarer, den Anpreßdruck beeinflussender Sekundärzylinder (27) zugeordnet sind und eine mit der Antriebsmaschine (3) treibend verbundene Druckmittelpumpe (40) das erforderliche Druckmittel liefert, wobei die elektro-hydraulische Ansteuerung (8) aus einem elektrisch vorgesteuerten Kupplungsdruckregelventil (86), einem elektrisch vorgesteuerten Übersetzungsregelventil (62) und einem elektrisch vorgesteuerten Systemdruckregelventil (64) besteht,

**dadurch gekennzeichnet,** daß

- das Übersetzungsregelventil (62) bei Stromausfall eines zugeordneten Vorsteuerventiles (122) in Durchgangsstellung den Sekundärkreis des Sekundärzylinders (27) mit dem Primärkreis des Primärzylinders (25) derart verbindet, daß in beiden Kreisen der gleiche Druck herrscht und damit die größte Übersetzung des stufenlos regelbaren Getriebes (7) gegeben ist,

- über ein vom Primärdruck aufzusteuerndes Sicherheitsventil (90) und ein vom Förderstrom der mit der Antriebsmaschine (3) gekoppelten Druckmittelpumpe (40) angesteuertes Drehzahlerkennungssicherheitsventil (88) drehzahlabhängig der Druck des Sekundärkreises als Steuerdruck dem Übersetzungsregelventil (62) führbar ist und

- damit das Übersetzungsregelventil (62) in eine solche Regelstellung (a) verschiebt, daß der Primärkreis des Primärzylinders (25) mit dem Sumpf verbunden ist und damit das stufenlos regelbare Getriebe (7) auf seine kleinste Übersetzung gebracht wird.

2. Elektro-hydraulische Regelgetriebesteuerung nach Anspruch 1, dadurch gekennzeichnet, daß der über das Drehzahlerkennungssicherheitsventil (88) dem Übersetzungsregelventil (62) zugeführte Steuerdruck gleichzeitig einem Kupplungssicherheitsventil (87) zuführbar ist und dieses in Entkupplungsstellung (a) verschiebt.

3. Elektro-hydraulische Regelgetriebesteuerung nach Anspruch 2, dadurch gekennzeichnet, daß die Steuerräume vom Übersetzungsregelventil (62) und Kupplungssicherheitsventil (87) über Drosseln (D5, D3) zum Tank entlastbar sind.

4. Elektro-hydraulische Regelgetriebesteuerung nach Anspruch 3, dadurch gekennzeichnet, daß das Sicherheitsventil (90) ein federbelastetes 2/2-Wegeventil ist, mit einem der Feder (163) gegenüberliegenden Steuerraum (711), der über ein federbelastetes Rückschlagventil (712) mit der Steuerleitung (D) (118a) verbunden ist, wobei im geschalteten Zustand des Steuerkolbens (713) der Steuerleitung (x, 117) mit dem Druckanschluß (P) verbunden ist.

5. Elektro-hydraulische Regelgetriebesteuerung nach Anspruch 4, dadurch gekennzeichnet, daß der Steuerraum (711) mit der Steuerleitung (x, 117) über eine mit einer Drossel (714) versehene Kolbenbohrung (715) verbunden ist, so daß auch bei Entlastung der Steuerleitung (D, 118a) der Druck im Steuerraum (711) erhalten und somit das Ventil im geschalteten Zustand bleibt, bis der Druck am Druckanschluß (P, 108) so weit absinkt, daß die Druckkraft auf den Kolben (713) kleiner wird als die Kraft der Feder(163).

6. Elektro-hydraulische Regelgetriebesteuerung nach Anspruch 1, dadurch gekennzeichnet, daß der Steuerraum (716) des als 3/2-Wegeventil ausgebildeten Kupplungssicherheitsventils (SV2) über eine gedrosselte Kolbenbohrung (717, 717a) in dauernder Verbindung mit dem Tankanschluß (T) steht.

7. Elektro-hydraulische Regelgetriebesteuerung nach Anspruch 1, dadurch gekennzeichnet, daß das Drehzahlerkennungssicherheitsventil (SV3) als volumenstromabhängiges 2/2-Wegeventil ausgebildet ist, das bei Überschreiten einer bestimmten Drehzahl (Volumenstrom, Position des Kolbens) den Strompfad (X, G) für die Steuerflüssigkeit unterbricht.

EP 0 324 928 B1

**Claims**

1. Electrohydraulic transmission control system for a mechanically operated gearbox (5) comprising a controllable clutch (4) and an infinitely variable speed mechanical transmission (7) with driving means (6) connected thereto, wherein the clutch (4) includes a forward coupling (11) and a reverse coupling (12) in connection with a planet wheel changeover unit and the infinitely variable speed mechanical transmission (7) includes a primary pair of discs (18) and a secondary pair of discs (19) connected through a thrust element strip (20), the primary pair of discs (18) having associated with it a primary cylinder (25) that can be acted on by a pressure medium and controls the speed ratio and the secondary pair of discs (19) having associated with it a secondary cylinder (27) that can be acted on by a pressure medium and influences the contact pressure, the pressure medium required being delivered by a pressure medium pump (40) drivably connected to the driving motor (3), the electrohydraulic control system (8) comprising an electrically pilot-controlled speed ratio adjusting valve (62) and an electrically pilot-controlled system pressure adjusting valve (64), characterised in that

   - in the event of current failure of an associated pilot valve (122) in the transitional position the speed ratio adjusting valve (62) connects the secondary circuit of the secondary cylinder (27) to the primary circuit of the primary cylinder (25) in such a way that the same pressure prevails in both cylinders, so that the highest speed ratio of the infinitely variable speed transmission (7) is obtained,
   - the pressure in the secondary circuit can be supplied in a speed-dependent manner as the control pressure of the speed ratio adjusting valve (62) by way of a safety valve (19) openable by the primary pressure and a speed-detecting safety valve (88) controlled by the delivery flow of the pressure medium pump (40) coupled with the driving motor (3), and
   - hence moves the speed ratio adjusting valve (62) into an adjusting position (a) such that the primary circuit of the primary cylinder (25) is connected to the sump and the continuously variable speed transmission (7) is brought to its lowest speed ratio.

2. Electrohydraulic variable-speed transmission control system according to claim 1, characterised in that

   - the control pressure supplied to the speed ratio adjusting valve (62) through the speed-detecting safety valve (88) can be supplied simultaneously to a clutch safety (87) and moves this into decoupling position (a).

3. Electrohydraulic variable-speed transmission control system according to claim 2, characterised in that

   - the control chambers of the speed ratio adjusting valve (62) and the clutch safety valve (87) can be relieved to the tank by way of throttles (D5,D3).

4. Electrohydraulic variable-speed transmission control system according to claim 3, characterised in that

   - the safety valve (90) is a spring loaded 2/2-way valve having opposed to the spring (163) a control chamber (711) that is connected by way of a spring loaded non-return valve (712) to the control line D (118a), the control line (x,117) being connected in the changed-over position of the control piston (713) to the pressure connection (P).

5. Electrohydraulic variable-speed transmission control system according to claim 4, characterised in that

   - the control chamber (711) is connected to the control line (x,117) by way of a piston bore (715) provided with a throttle (714), so that even when the control line (D,118a) is relieved of pressure the pressure in the control chamber (711) is maintained and consequently the valve remains in the changed-over position until the pressure at the pressure connection (P,108) falls so far that the force exerted by the pressure acting on the piston (713) is lower than the force exerted by the spring (163).

6. Electrohydraulic variable-speed transmission control system according to claim 1, characterised in that

14

- the control chamber (716) of the clutch safety valve (SV2) in the form of a 3/2-way valve is permanently connected to the tank connection (T) by way of a throttled piston bore (717,717a).

7. Electrohydraulic variable-speed transmission control system according to claim 1, characterised in that
   - the speed-detecting safety valve (SV3) is in the form of a volumetric flow dependent 2/2-way valve that interrupts the flow path (X, G) of the control fluid if a predetermined speed (volumetric flow, piston position) is exceeded.

**Revendications**

1. Commande de transmission électrique et hydraulique destinée à une transmission (5) à actionnement mécanique composée d'un dispositif d'embrayage (4) pouvant être commandé et d'une transmission mécanique (7) qui peut être réglée continûment et qui comprend un dispositif d'entraînement (6) s'y raccordant, cependant que le dispositif d'embrayage (4) comporte un embrayage de marche avant (11) et un embrayage de marche arrière (12) en liaison avec un train planétaire d'inversion, et que la transmission mécanique (7) qui peut être réglée continûment comporte une paire de joues de poulie primaire (18) et une paire de joues de poulie secondaire (19) reliées par l'intermédiaire d'une courroie baladeuse (20), cependant qu'un cylindre primaire (25) qui peut être alimenté en fluide sous pression et qui commande le rapport de transmission est associé à la paire de joues de poulie primaire (18), qu'un cylindre secondaire (27) qui peut être alimenté en fluide sous pression et qui influence la pression de serrage est associé à la paire de joues de poulie secondaire (19), et qu'une pompe à fluide sous pression (40) qui est reliée en entraînement au mécanisme d'entraînement (3) fournit le fluide sous pression nécessaire, et cependant que la commande électrique et hydraulique (8) se compose d'une valve de régulation de la pression de l'embrayage (86) à pilotage électrique, d'une valve de régulation du rapport de transmission (62) à pilotage électrique et d'une valve de régulation de la pression du système (64) à pilotage électrique, caractérisée par le fait que :
   - La valve de régulation du rapport de transmission (62), en cas de coupure du courant sur une valve pilote associée (122), relie en position de passage le circuit secondaire du cylindre secondaire (27) au circuit primaire du cylindre primaire (25), et ce, d'une manière telle que la même pression règne dans les deux circuits, et que l'on obtienne ainsi le rapport de transmission le plus élevé pour la transmission (7) qui peut être réglée continûment,
   - Par l'intermédiaire d'une valve de sécurité (90) destinée à être commandée par la pression primaire et d'une valve de sécurité à détection du nombre de tours (88) commandée par l'écoulement qui est déplacé par la pompe à fluide sous pression (40) accouplée au mécanisme d'entraînement (3), la pression du circuit secondaire peut être amenée à la valve de régulation du rapport de transmission (62) en fonction du nombre de tours et sous la forme d'une pression de commande, et :
   - La valve de régulation du rapport de transmission (62) se déplace ainsi jusque dans une position de régulation (a) qui est telle que le circuit primaire du cylindre primaire (25) soit relié au réservoir, et que la transmission (7) qui peut être réglée continûment soit ainsi amenée à son rapport de transmission le plus faible.

2. Commande de transmission électrique et hydraulique selon la revendication 1, caractérisée par le fait que la pression de commande amenée à la valve de régulation du rapport de transmission (62) par l'intermédiaire de la valve de sécurité à détection du nombre de tours (88) peut être amenée en même temps à une valve de sécurité de l'embrayage (87), et qu'elle déplace celle-ci jusque dans la position de débrayage (a).

3. Commande de transmission électrique et hydraulique selon la revendication 2, caractérisée par le fait que les chambres de commande de la valve de régulation du rapport de transmission (62) et de la valve de sécurité de l'embrayage (87) peuvent être déchargées vers le réservoir par l'intermédiaire d'étranglements (D5, D3).

4. Commande de transmission électrique et hydraulique selon la revendication 3, caractérisée par le fait que la valve de sécurité (90) est une valve à 2/2 voies rappelée par un ressort, laquelle comprend une chambre de commande (711) qui est opposée au ressort (163) et qui est reliée à la conduite de commande (D, 118a) par l'intermédiaire d'une soupape anti-retour (712) rappelée par un ressort, la conduite de commande (X, 117) étant reliée au raccordement à la pression (P) dans l'état commuté du piston de commande (713).

5. Commande de transmission électrique et hydraulique selon la revendication 4, caractérisée par le fait que la chambre de commande (711) est reliée à la conduite de commande (X, 117) par l'intermédiaire d'un perçage (715) ménagé dans le piston et muni d'un étranglement (714), de sorte que, même lors de la décharge de la conduite de commande (D, 118a), la pression est conservée dans la chambre de commande (711) et que la valve reste ainsi à l'état commuté, et ce, jusqu'à ce que la pression sur le raccordement à la pression (P, 108) diminue suffisamment pour que la force de la pression sur le piston (713) devienne inférieure à la force du ressort (163).

6. Commande de transmission électrique et hydraulique selon la revendication 1, caractérisée par le fait que la chambre de commande (716) de la valve de sécurité de l'embrayage (SV2) qui est réalisée sous la forme d'une valve à 3/2 voies est en liaison permanente avec le raccordement au réservoir (T) par l'intermédiaire d'un perçage étranglé (717, 717a) ménagé dans le piston.

7. Commande de transmission électrique et hydraulique selon la revendication 1, caractérisée par le fait que la valve de sécurité à détection du nombre de tours (SV3) est réalisée sous la forme d'une valve à 2/2 voies dépendant du débit volumique, laquelle interrompt le trajet d'écoulement (X, G) destiné au liquide de commande lorsqu'un nombre de tours déterminé (débit volumique, position du piston) est dépassé vers le haut.

FIG.:1

EP 0 324 928 B1

FIG.:2

FIG.:3

FIG.: 3

Fig. 4a

## Fig. 4b

Rückwärtskupplung
Vorwärtskupplung
Schmierölkreislauf

73

Kühler

Gangwählv.

78  72  71

76  77

70

## Fig. 4c

75  74

41

24  23

42

118a  30,31  29

20

21  22

72  71

Fig. 5a — EP 0 324 928 B1

Fig. 5b

Fig. 5c

90   D4   91   83

D2   P7   X1   T10   C2   T9   G4   H4   I4

118a   118   PRIM.: B2   21   22   30,31   4   3

6   20   29

SEC.: P7   7

B2 – Anschluß   p ≤ 20 bar im Normalbetrieb

B2 – Anschluß   p = 30 bar bei Stromausfall

EP 0 324 928 B1

Fig. 6

190  387  129  189  188  186  287  187

P  T  P  A  T  T

122  D5  127  123  62

125

126

701  128

EP 0 324 928 B1

26

Fig. 7

27

Fig. 8

EP 0 324 928 B1

Fig. 9

SV.2

Fig. 10

Fig. 12

715  713  714  711  712

90

163

SV.1

Fig. 13

X      P                    D

EP 0 324 928 B1

33

Funktionsdiagramm   REGELGETRIEBESTEUERUNG                              Fig. 14

| Betriebs-zustand / Funktions-größen | Autobahn-fahrt | Brems-vorgang | Fahrzeug-stillstand | Höchst-geschw. | Stör-fall | Brems-vorgang | Still-stand | Vollgas |
|---|---|---|---|---|---|---|---|---|
| Motordrehzahl   n | | | | | | | | |
| Pumpenförder-menge   Q | | | | | | | | |
| Getriebe-übersetzung   i | | | | | | | | |
| Übersetzungs-reglersignal | | | | | | | | |
| Systemdruck   P1 | | | | | | | | |
| Kupplungs reglerdruck   A1 | | | | | | | | |
| Schmieröldruck   L2 | | | | | | | | |
| Störfall-Steuersignal   X1 | | | | | | | | |
| Drehzahl-Steuersignal   F2 | | | | | | | | |
| Kupplungsdruck   C1 | | | | | | | | |

EP 0 324 928 B1